# DEMANDE DE BREVET EUROPEEN

(11) **EP 1 267 479 A1**
(43) Date de publication de la demande: **18.12.2002**
(21) Numéro de dépôt: 01810585.8
(22) Date de dépôt: 15.06.2001
(51) Int. Cl.: H02P 6/18, H02P 6/20, H02P 6/14

(54) **Moteur à courant continu sans collecteur, procédé de demarrage et utilisation de celui-ci**

(71) Demandeur: SAIA-Burgess Murten AG, 3280 Murten (CH)
(72) Inventeur: Débieux, Jean-Marie, 1553 Châtonnaye (CH)
(74) Mandataire: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Abrégé**

Le moteur (A,B,N/S) sans collecteur est commandé par un circuit électronique comportant un comparateur symétrique (R1-R6,2,3,C3,C4). Ce moteur présente des avantages particulièrement dans des applications automobiles, pour le démarrage et pour la détection de butées.

## Description

La présente invention concerne un moteur à courant continu selon le préambule de la revendication 1. Les avantages d'un tel moteur sont connus, à savoir: La longue durée de vie due à l'absence de frottements créés par les charbons sur le collecteur, ceux-ci étant remplacés par une électronique. Mais cette électronique de commande du driver doit connaître la position du rotor pour réaliser la commutation au bon instant. Ceci peut se faire à l'aide de capteurs de position, c'est à dire des éléments additionnels dont les signaux permettent une analyse et ainsi une commande optimale.

La présente invention vise une base améliorée pour la commande du moteur, un procédé de démarrage et une utilisation de celui-ci. Cette base est définie dans la partie charactérisante de la revendication 1, et les possibilités et avantages qui en résultent seront expliqués ci-après à l'aide des dessins dans lesquels
la Fig. 1 est un schéma partiel de l'électronique de commande du moteur,
la Fig. 2 est un diagramme d'un cycle de commande,
les Fig. 3a et 3b sont des diagrammes qui montrent un effet de l'électronique selon la Fig. 1, et
la Fig. 4 est un diagramme qui sert à l'explication du procédé de démarrage.

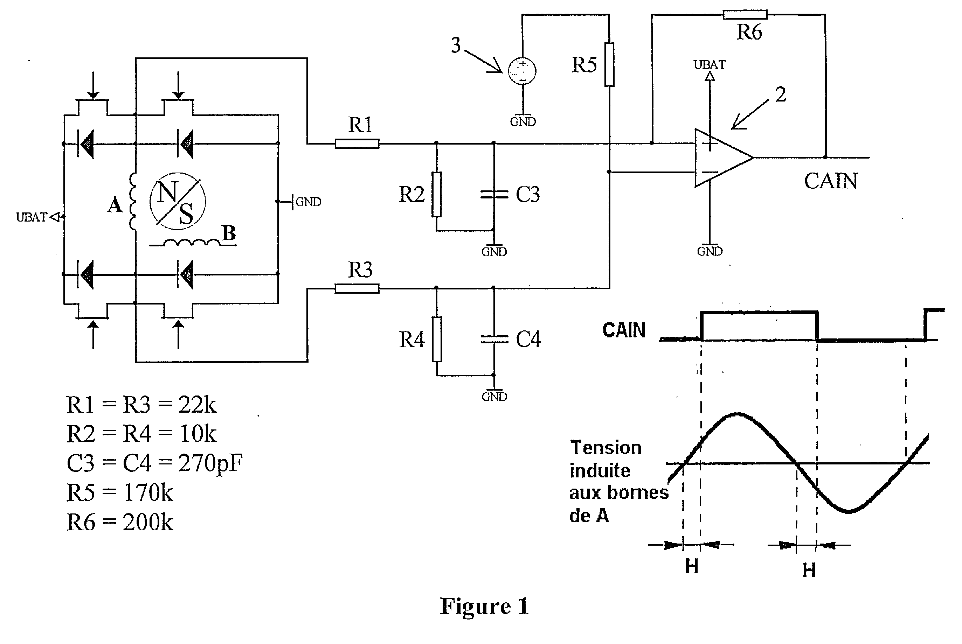

La Fig. 1 représente schématiquement le moteur par une bobine d'une première phase A branchée dans un pont de transistors 1 du driver. Une bobine B d'une deuxième phase est indiquée sans électronique associée qui est identique à celle de la phase A. La bobine A est branchée aux entrées + et - d'un amplificateur opérationnel 2. Un système de diviseurs de tension et d'une source de tension 3 définissent des potentiels appropriés aux entrées de l'amplificateur 2 de sorte que le circuit représenté agit comme comparateur à hystérèse symétrique.

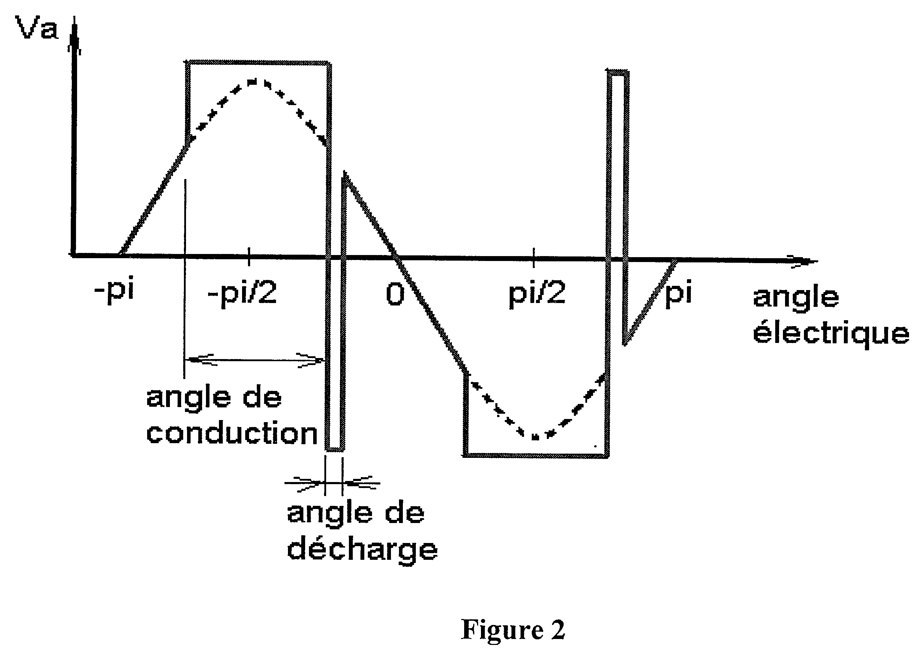

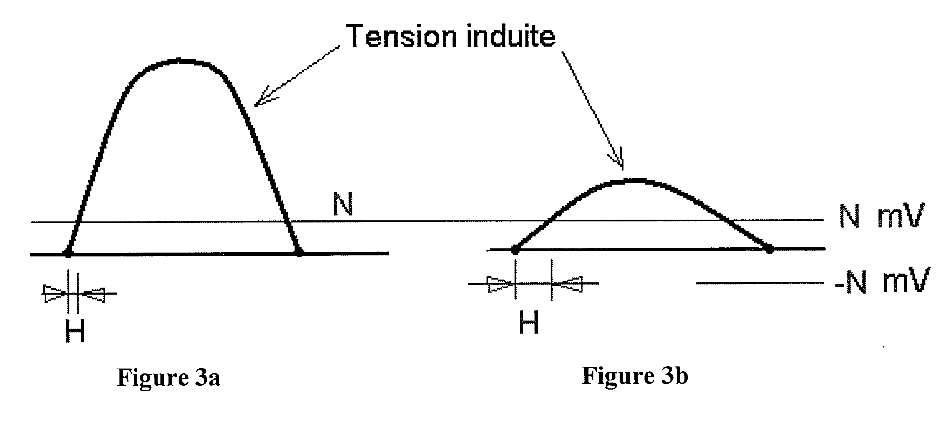

La Fig. 2 représente le principe du fonctionnement du circuit selon la Fig. 1. Le signal sinusoïdal représente la tension induite dans la bobine A lors de la rotation du rotor du moteur. On voit que des impulsions d'entraînement (angle de conduction) sont déclenchées avec un certain retard ou une "hystérèse symétrique" après le passage par 0 de la tension induite. Cela présente deux avantages:
- Détection de butée. Lorsque la vitesse est proche de zéro l'information de tension induite n'est plus forcément utilisable (trop faible) pour faire la gestion des pas. Cette hystérèse (si elle est suffisamment grande) évite d'avoir un signal erroné (vitesse nulle = tension induite nulle est interprété comme si le rotor avait atteint la position donnée, ce qui n'est pas le cas!). La détection de butée survient lorsque la fréquence du moteur descend en-dessous d'une valeur limite. Cependant avec peu d'élasticité la fréquence tombe subitement à zéro et sans hystérèse cela donne un mauvais signal de commande qui peut se traduire par des oscillations du rotor.
- Pour l'angle d'avance à la commutation: à haute vitesse il faut un grand angle d'avance à la commutation (environ 90°), tandis qu'à basse vitesse il faut un petit angle d'avance (environ 45°). Cela permet d'optimiser le couple en fonction de la vitesse. Une grande hystérèse permet donc de varier significativement l'angle d'avance en fonction de l'amplitude de la tension induite, qui elle-même est proportionnelle à la vitesse. La valeur de cette hystérèse variera cependant pour chaque moteur. Les Fig. 3a et 3b montrent que pour un niveau N de déclenchement donné le retard ou l'hystérèse H est plus court pour une grande vitesse et tension induite (Fig. 3a) que pour une petite vitesse et tension induite (Fig. 3b).

Dans un exemple de réalisation pratique du comparateur à hystérèse symétrique, le diviseur formé de R1, R2 et R3, R4 évite que l'entrée négative de l'AO 2 ne descende en dessous de -0.3V. En fait cette tension serait limitée à -0.7V environ à cause des diodes du pont en H, et grâce au diviseur 1/3 cette tension est ramenée à -0.7V/3.

La valeur de l'hystérèse dépend du rapport entre toutes ces résistances. Dans cet exemple cela donne environ 0.64V d'hystérèse. La source de tension 3 et la résistance R5 servent à rendre le comparateur symétrique (+0.64V, -0.64V), mais elles influencent aussi la valeur de l'hystérèse. Il va de soi que ces valeurs peuvent être choisies autrement selon les caractéristiques du moteur et/ou l'application de celui-ci. Le signal de sortie de l'amplificateur opérationnel 2 monte et descend avec le retard sus-mentionné, et cette sortie commande un microprocesseur qui est à même de contrôler les transistors du pont en H (Fig. 1).

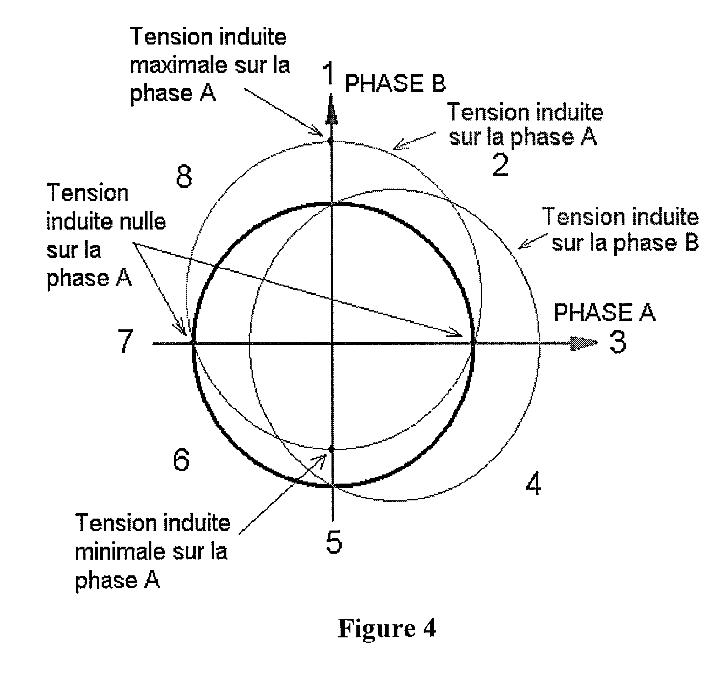

Le moteur suivant la présente invention permet des procédures de démarrage particulièrement favorables. Elles sont expliquées à l'aide de la Fig. 4 ci-après, figure dans laquelle les positions stables possibles du rotor sont numérotées 1 à 8.
1. Procédure
   - Départ:: alimentation de la phase B en positif
   pendant un temps fixe donné (par exemple 50ms) pour fixer le rotor dans la position 1;
   - 1er pas:: alimentation de la phase A en positif pendant un temps fixe donné;
   - 2ème pas:: alimentation de la phase B en négatif;
   - Ensuite:: Dès que cette position 3 est atteinte (signal du comparateur), on donne le pas suivant et ainsi de suite (autocommutation).
   Remarque: Ce type d'avance est donc de 90° (si le comparateur a peu d'hystérèse). Une avance de 0° n'est pas faisable, car alors, la tension induite est cachée par la tension d'alimentation. En fait la tension induite devient nulle lorsque le rotor atteint la position alimentée (si c'est la position de stabilisation du rotor).
2. Procédure
   - Départ:: alimentation de la phase A en positif et de la phase B en négatif pendant 50ms pour fixer le rotor dans la position 2;
   - 1er pas:: alimentation de la phase B en négatif;
   - Ensuite:: Dès que cette position 3 est atteinte (signal du comparateur), on donne le pas suivant et ainsi de suite (autocommutation).
   Remarque: Ce type d'avance est donc de 90° (si le comparateur a peu d'hystérèse).

Cette deuxième méthode semble meilleure car tout d'abord les positions "deux phases on" (sans courant) sont plus stables que les positions "une phase on". Ensuite cela permet de démarrer directement l'autocmmutation en "une phase on" sans perte de pas et indépendamment des caractéristiques du moteur ou des conditions extérieures (tension, couple....). Enfin c'est le moyen le plus radical pour stopper le rotor avec un couple maximum. Les nouveautés et avantages décrit ci-devant (démarrage et traitement de la tension induite) s'appliquent aussi à un autre système d'autocummutation appelé "Tetradrive". C'est un système basé sur le croisement des tensions induites, mais le principe reste le même. Son avantage est que toutes les bobines sont utilisées à la fois. Cependant le moteur nécessite quatre phases connectées de façon spéciale.

Le moteur décrit ci-dessus présente certains avantages dans des applications automobile, à savoir:
- Le positionnement de clapets de mélange ou d'entrée d'air utilisés dans les climatiseurs automobiles nécessitent deux types d'actionneurs: un actionneur lent pour les clapets de mélange d'air et un actionneur rapide pour les clapets de fermeture de l'air (Schnellläufer). Grâce à l'utilisation d'un système d'autocummutation, on peut répondre à ces deux types d'applications par un seul moteur. Le couple et la vitesse du moteur autocommuté s'adaptent selon la charge. Le réglage du couple et de la vitesse peuvent également se faire par PWM (pulse width modulation).
- L'autocommutation garantit l'absence totale de perte de pas. De ce fait, les procédures d'initialisation pourront être simplifiées et répétées plus rarement. Par initialisation on entend la recherche de butée pour donner au moteur une position de référence. Cette initialisation peut se faire lorsque l'on démarre le véhicule. Ensuite grâce à l'autocommutation plus aucune initialisation n'est nécessaire (pour autant que l'on puisse stoquer en mémoire la position en cas de coupure de l'alimentation), vu que l'autocommutation garantit l'absence de perte de pas.
- Le système de mesure utilisé dans la réalisation de l'autocommutation permet également de savoir si des pas ont été forcés, par exemple lorsqu'un flux d'air très puissant réussi à vaincre le couple résistant de l'actionneur et a mouvoir le clapet. La reprise en compte des pas forcés par le système de commande garantit la précision de la boucle de réglage.
- L'autocommutation répond tout particulièrement aux applications automobiles, car le domaine de tension est large. Le système autocommuté est insensible aux variations de tension. La détection de butées est très fiable, indépendamment de la température (-40 à 85°C dans le domaine automobile) et des variations ou sauts de tension (8 à 16 V).

## Revendications

1. Moteur à courant continu sans collecteur, avec une électronique de commande pour enclencher et déclencher les impulsions d'entraînement (4) dans l'enroulement (A, B) du moteur, **caractérisé en ce que** ladite électronique (Fig. 1) est commandée par les tensions induites dans l'enroulement lors du déplacement du rotor du moteur.

2. Moteur selon la revendication 1, c.e.c.q. ladite électronique comporte un comparateur à hystérèse branché avec son entrée audit enroulement (A, B) du moteur et avec sa sortie au circuit de commande pour les impulsions d'entraînement (4).

3. Moteur selon la revendication 2, **caractérisé par** un comparateur à hystérèse symétrique.

4. Moteur selon la revendication 3, c.e.c.q. ledit comparateur comporte au moins un amplificateur opérationnel (2), une bobine de l'enroulement du moteur étant branchée entre les entrées dudit amplificateur opérationnel (2).

5. , Moteur selon l'une des revendications 2 à 4, c.e.c.q. les tensions aux entrées dudit amplificateur sont déterminées par un système de diviseurs de tension (R1 à R5) et une source de tension (3).

6. Procédé de démarrage d'un moteur à courant continu sans collecteur selon la revendication 1, c.e.c.que le rotor est amené et fixé dans une position de départ déterminée par alimentation continue de l'enroulement (A et/ou B) et ensuite l'alimentation est modifiée pour effectuer un premier pas, après quoi les impulsions d'entraînement sont commandées automatiquement par la tension induite dans l'enroulement.

7. Procédé selon la revendication 6 pour un moteur biphasé, dans lequel une phase est alimentée pour amener et fixer le rotor dans sa position de départ.

8. Procédé selon la revendication 6 pour un moteur biphasé, dans lequel les deux phases sont alimentées en même temps pour amener et fixer le rotor dans une position de départ intermédiaire.

9. Utilisation du moteur selon la revendication 1 dans des applications automobiles comme actionneur lent pour des clapets de mélange d'air et un actionneur rapide pour les clapets de fermeture de l'air.
